# FASCICULE DE BREVET EUROPEEN

(11) **EP 3 201 514 B1**
(45) Date de publication et mention de la délivrance du brevet: **26.06.2019**
(21) Numéro de dépôt: 15767552.1
(22) Date de dépôt: 25.09.2015
(51) Int. Cl.: F21K 9/00, F21V 23/06, F21V 29/74, F21S 41/19, F21S 41/141, F21S 45/47, F21Y 115/10

(54) **MODULE LUMINEUX COMPORTANT AU MOINS UN COMPOSANT ET UN CONNECTEUR DISPOSÉS SUR UN DISSIPATEUR DE CHALEUR, ET DISPOSITIF D'ÉCLAIRAGE POUR VÉHICULE AUTOMOBILE COMPORTANT UN TEL MODULE**
LEUCHTMODUL MIT MINDESTENS EINER KOMPONENTE UND EINEM VERBINDER AUF EINEM WÄRMEABLEITER UND BELEUCHTUNGSVORRICHTUNG FÜR KRAFTFAHRZEUG MIT SOLCH EINEM MODUL
LUMINOUS MODULE COMPRISING AT LEAST ONE COMPONENT AND A CONNECTOR WHICH ARE DISPOSED ON A HEAT DISSIPATER, AND LIGHTING DEVICE FOR AUTOMOTIVE VEHICLE COMPRISING SUCH A MODULE

(30) Priorité: 30.09.2014 FR 1459300
(43) Date de publication de la demande: 09.08.2017
(73) Titulaire: Valeo Vision, 93012 Bobigny Cedex (FR)
(72) Inventeur: MORNET, Eric, F-94130 Nogent sur Marne (FR)
(74) Mandataire: Oggioni, Baptiste
(86) Numéro de dépôt international: PCT/EP2015/072154
(87) Numéro de publication internationale: WO 2016/050651

(56) Documents cités:
- EP-A1- 2 607 783
- EP-A2- 1 503 139
- EP-A2- 1 674 786
- EP-A2- 2 423 573
- WO-A1-2011/078217
- US-A1- 2012 007 506

## Description

### DOMAINE TECHNIQUE DE L'INVENTION

L'invention concerne un module lumineux comportant au moins un composant semi-conducteur et un connecteur électrique, montés sur un élément d'interconnexion électrique du type carte de circuit imprimé, et reliés à un dissipateur de chaleur.

La présente invention trouve son application plus particulièrement dans le cadre du montage d'une source de lumière dans un projecteur d'éclairage ou un feu signalisation pour véhicule automobile.

### ARRIERE PLAN TECHNIQUE DE L'INVENTION

Dans le domaine de l'éclairage automobile, il est connu, lorsque l'on utilise des diodes électroluminescentes (ou LED pour « *Light-Emitting Diodes* » en anglais, qui est un composant semi-conducteur) comme source de lumière, de connecter ces LED à l'aide d'un élément d'interconnexion électrique, par exemple de type carte de circuit imprimé (ou PCB pour « *Printed Circuit Board* » en anglais), assurant la connexion électrique entre les LED et d'autres composants qui peuvent y être montés, et de disposer ensuite les LED et le PCB sur un dissipateur de chaleur (typiquement un radiateur), ce dissipateur étant ensuite monté dans le projecteur ou le feu sur un support, par exemple un réflecteur de projecteur.

La liaison électrique de la carte de circuit imprimé portant les LED au reste du véhicule nécessite le montage d'un connecteur sur la carte, le connecteur assurant le contact entre la carte et un faisceau de fils électriques réalisant la liaison au véhicule. Il est usuel d'utiliser pour se faire un connecteur en deux parties. Plus précisément, une première partie du connecteur (partie femelle) est d'abord soudée à la carte de circuit imprimé ; la carte est ensuite placée sur le dissipateur de chaleur, qui est ensuite disposé sur le support du projecteur. Une fois le dissipateur de chaleur placé sur son support, la liaison électrique entre la carte de circuit imprimé et le reste du véhicule est réalisée par la jonction de la deuxième partie de connecteur (partie mâle) à la première, la deuxième partie de connecteur étant solidaire du faisceau de fils électriques de liaison.

Toutefois, le mode opératoire ci-dessus présente l'inconvénient d'être coûteux, dans la mesure où, d'une part, les opérations de connexion relatives à la carte de circuit imprimé impliquent des températures élevées qui doivent pouvoir être supportées par le matériau formant la première partie du connecteur, qui est fixée sur la carte, renchérissant ainsi son coût. D'autre part, le procédé de montage est long, et donc couteux en main d'oeuvre, puisqu'une fois le dissipateur placé sur son support d'éclairage, il y a ensuite lieu de connecter la deuxième partie de connecteur, reliée au faisceau de fils électriques, à la première partie de connecteur fixée sur la carte de circuit imprimé et, ce, dans un espace confiné, et donc peu accessible, entre le support et le dissipateur, ce qui peut s'avérer difficile. Enfin, ce processus nécessite la réalisation de tests pour vérifier que la connexion entre les deux parties de connecteur est correctement établie, et ce avec un matériel dédié, ce qui est un facteur de renchérissement supplémentaire.

Les documents EP2423573, EP1503139, EP1674786 et EP2607783 montrent des modules lumineux selon le préambule de la revendication 1.

### BREF RESUME DE L'INVENTION

L'invention a pour but de pallier ces inconvénients en procurant une solution moins onéreuse tout en permettant une fiabilité satisfaisante et un assemblage aisé et donc rapide des différents éléments du dispositif d'éclairage.

A cet effet, l'invention a pour objet un module lumineux comportant au moins un composant électronique et un connecteur électrique, le composant et le connecteur étant interconnectés par un dispositif d'interconnexion électrique, le dispositif d'interconnexion étant fixé à un dissipateur de chaleur,
- le connecteur comportant des contacts de connexion électrique,
- le connecteur étant disposé sur une face du dispositif d'interconnexion de sorte que les contacts traversent le dispositif d'interconnexion pour émerger sur une autre de ses faces, où ils sont reliés électriquement au dispositif d'interconnexion,
- le dispositif d'interconnexion étant fixé au dissipateur par la face d'émergence des contacts,
- la surface du dissipateur thermique recevant le dispositif d'interconnexion présentant une cavité au moins au niveau des contacts, de façon à éviter le contact électrique des contacts avec le dissipateur, et caractérisé par le fait que la cavité du dissipateur est constituée par un bossage.

De cette façon, notamment dans le cadre de l'application particulière au montage d'une source de lumière dans un projecteur de véhicule automobile, l'homme du métier peut utiliser un connecteur en une seule partie, qui comporte contacts de connexion et faisceau de fils électriques de liaison connectés entre eux dans le connecteur lui-même de façon non amovible et donc fiable, le fixer à un dispositif d'interconnexion électrique (par exemple une carte de circuit imprimé), fixer la carte de circuit imprimé sur le dissipateur sans que les contacts de connexion ne posent de problèmes mécanique ou électrique avec le dissipateur grâce à la cavité, pour ensuite placer le dissipateur de chaleur sur un support dans le projecteur. De cette façon, il est possible de s'affranchir de l'étape de montage de la deuxième partie de connecteur puis de l'étape de test de la liaison électrique des deux parties.

Selon différents modes de réalisation de l'invention, qui pourront être pris ensemble ou séparément :
- le composant électronique est disposé sur le dissipateur et il est connecté électriquement au dispositif d'interconnexion ;
- le composant électronique est disposé sur le dispositif d'interconnexion et relié électriquement à ce dernier ;
- le dispositif d'interconnexion est en contact thermique avec le dissipateur ;
- la cavité présente une profondeur permettant de laisser subsister un écartement entre les contacts et le dissipateur suffisant pour éviter un arc électrique entre contacts et dissipateur ;
- le composant électronique comprend au moins une puce émettrice semi-conductrice, de préférence une diode électroluminescente ;
- le dissipateur est sensiblement en forme de L ;
- le dispositif d'interconnexion est fixé au dissipateur par l'intermédiaire de l'une des branches du L formé par le dissipateur ;
- le dissipateur comprend des ouvertures ;
- la cavité du dissipateur comporte des trous pour l'évacuation d'une éventuelle accumulation d'eau ;
- la liaison électrique entre les contacts et le dispositif d'interconnexion est une soudure à la vague ou un contact de type poussoir.

L'invention se rapporte également à un dispositif lumineux, notamment d'éclairage et/ou de signalisation pour véhicule automobile, comprenant un tel module. Selon différents modes de réalisation, qui pourront être pris ensemble ou séparément :
- le dispositif lumineux, notamment d'éclairage et/ou de signalisation pour véhicule automobile, comporte un support et un module selon l'invention, ce dernier étant fixé au support du dispositif d'éclairage ;
- le module est fixé au support par l'intermédiaire du dissipateur ;
- le dissipateur est fixé au support par l'intermédiaire de l'autre des branches du L ;
- le support est un réflecteur du dispositif lumineux.

### BREVE DESCRIPTION DES FIGURES

D'autres caractéristiques et avantages de l'invention ressortiront de la description détaillée qui suit, donnée à titre indicatif et illustrée par les dessins annexés, qui représentent :
- la figure 1, une vue en perspective coupée d'un mode de réalisation du module selon l'invention ;
- la figure 2, une vue en coupe du module de la figure 1 ;
- la figure 3, une vue en perspective montrant la face dite ventrale du module précédent ;
- la figure 4, une vue en perspective montrant la face dite dorsale du module précédent ;
- la figure 5, une vue en perspective du module précédent une fois monté sur une partie support d'un dispositif lumineux, notamment d'éclairage et/ou de signalisation pour véhicule automobile.

### DESCRIPTION DETAILLEE DES FIGURES

Dans la suite de la description, des éléments présentant une structure identique ou des fonctions analogues sont désignés par les mêmes références.

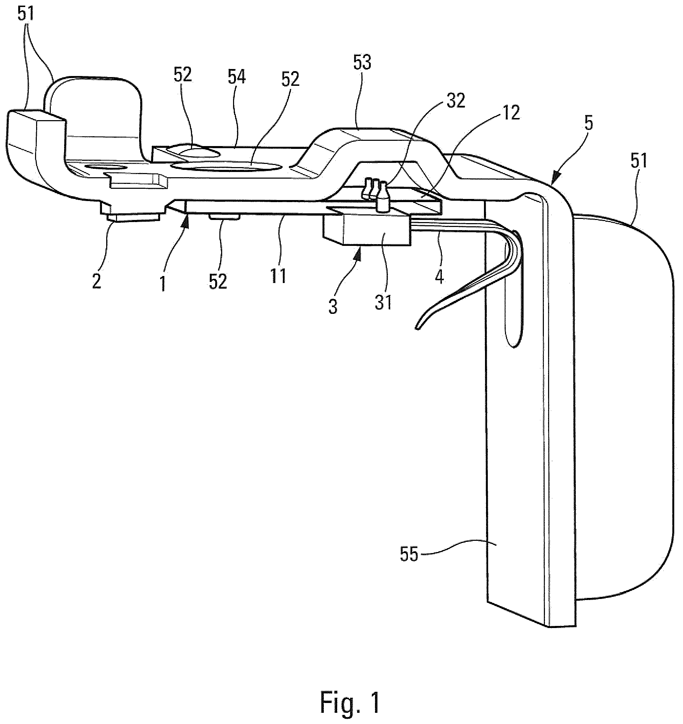

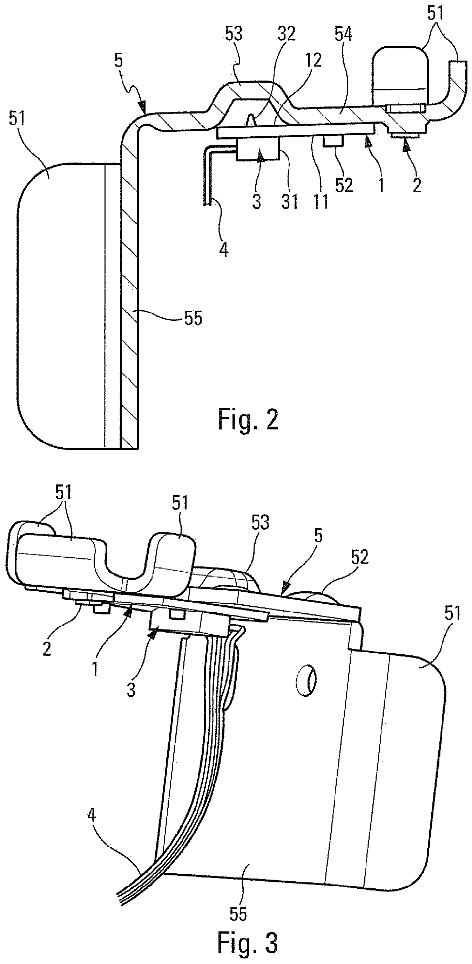

La figure 1 représente le module selon l'invention vu à la fois en perspective et en coupe, la figure 2, le même module vu uniquement en coupe et la figure 3, vu en perspective.

Le dispositif comporte un élément d'interconnexion électrique 1, par exemple du type carte de circuit imprimé ou PCB, sur lequel sont fixés et/ou interconnectés des composants électroniques 2. Ces composants comprennent par exemple une ou plusieurs puces émettrices semiconductrices, de préférences des diodes LED dans le cas d'une application à un dispositif lumineux, notamment d'éclairage et/ou de signalisation pour véhicule automobile.

La carte de circuit imprimé 1 porte au moins un connecteur 3, disposé sur une face 11 de la carte et destiné à assurer la connexion électrique entre la carte et un faisceau de fils électriques 4, réalisant la liaison électrique avec le reste du véhicule.

Le connecteur 3 comporte, dans le mode de réalisation représenté, un boitier 31 unique, auquel sont fixés des moyens de contact électrique, tels que des contacts, ou broches, de connexion 32 dépassant du boitier, ainsi que les fils de liaison 4. Les fils 4 et les contacts 32 sont fixés à l'intérieur du boitier 31 et respectivement connectés électriquement entre eux, c'est-à-dire un contact en principe à un seul fil de liaison.

Les contacts 32 traversent la carte 1 pour être connectés électriquement aux circuits portés par la carte sur l'autre face 12 de la carte, opposée à la face 11 et dite face d'émergence. Cette connexion sur la carte peut être réalisée par exemple par un procédé de soudure à la vague, qui va également garantir le maintien en position du connecteur. La soudure à la vague est de préférence sélective, c'est-à-dire concernant seulement une zone sélectionnée. La connexion peut également s'effectuer à l'aide d'un contact de type poussoir.

La carte 1 est fixée sur un dissipateur de chaleur 5, destiné à évacuer la chaleur produite par les composants électroniques 2. La carte 1 est de préférence en contact thermique avec le dissipateur 5. Le dissipateur 5 est réalisé en un matériau bon conducteur thermique, de préférence peu onéreux, pas trop lourd et facile à manufacturer, tel qu'un métal, de préférence de l'aluminium.

Dans le mode de réalisation représenté sur les figures, au moins un composant 2 est fixé sur le dissipateur 5 lui-même, par exemple par collage, le composant étant relié électriquement à la carte 1 par pontage, à l'aide de fils de connexion électriques, par exemple métalliques (non représentés). Ce mode de réalisation permet d'optimiser le refroidissement du composant 2. Dans une variante, les composants 2 peuvent être portés par la carte 1, par exemple soudés.

Toujours dans l'exemple représenté sur les figures, le dissipateur 5 a une forme générale sensiblement en forme de 'L', la carte 1 étant disposée sur une des branches 54 du L, sur une face dite ventrale, c'est à dire orientée vers l'intérieur du L. L'autre branche du L est repérée 55. Le dissipateur est muni d'ailettes 51 disposées au moins sur la branche 55 du L, et, dans la variante représentée, sur chacune des branches du L, facilitant l'évacuation thermique. Il est également muni de diverses ouvertures ou bossages, repérés indistinctement 52, destinés à la fixation de la carte 1 sur le dissipateur et à la fixation ultérieure du dissipateur 5, et/ou destinées à permettre la circulation de l'air.

Selon l'invention, le dissipateur 5 comporte en outre une cavité 53, constituée par un bossage, qui s'étend au moins au droit des contacts 32 du connecteur 3 vers la face dorsale ou extérieure du L formé par le dissipateur, afin de ménager un espace entre les contacts et le dissipateur pour loger ces derniers en évitant tout contact électrique entre contacts et dissipateur. De préférence, le bossage 53 a une profondeur telle qu'elle laisse subsister un écartement suffisant entre contacts et dissipateur pour éviter également tout risque d'arc électrique entre ces éléments ; un écartement d'environ un millimètre convient dans des applications d'éclairage automobile.

De la sorte, il est possible d'utiliser un connecteur 3 unique, muni de contacts traversant la carte électronique et connectés à cette dernière par un procédé tel que la soudure à la vague, impliquant une élévation de température qui reste modérée et permet d'utiliser des composants et matériaux moins onéreux ; ce connecteur unique est simple d'utilisation, fiable et ne nécessite pas d'étape ultérieure de test de connexion comme dans le cas de connecteurs en deux parties.

Une telle configuration selon l'invention permet en outre d'éviter l'utilisation de tout adhésif entre le dissipateur 5 et la carte 1, adhésif qui de plus devrait être isolant électriquement.

Il est à noter que les pistes d'interconnexion électrique portées par la carte 1 devront être disposées soit sur sa face 11, soit sur sa face 12 au droit du bossage 53.

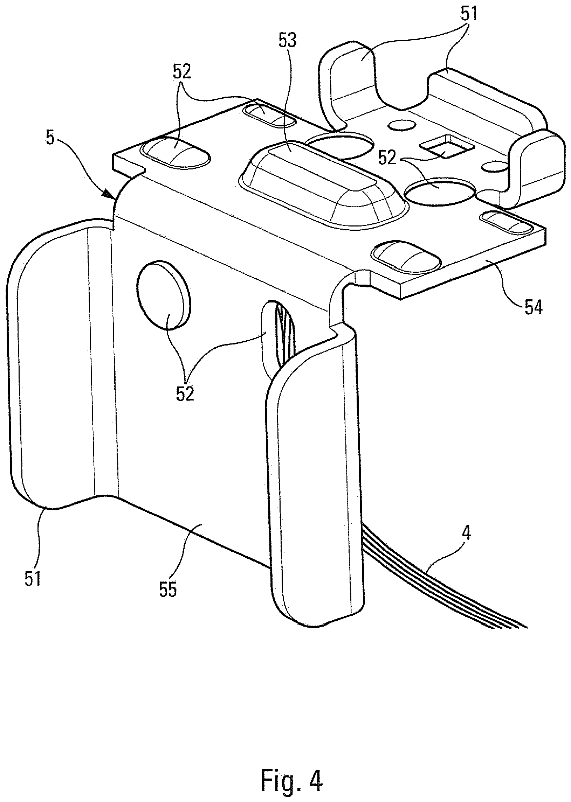

La figure 4 représente une autre vue en perspective du module précédent, dans laquelle on voit les faces dorsales du dissipateur 5, c'est-à-dire ses faces tournées vers l'extérieur du L.

Sur cette figure, on retrouve le dissipateur thermique 5 en forme de L. On a représenté, sur la face dorsale de la branche 54 du L, les différents bossages et ouvertures 52 de fixation, ainsi que le bossage 53 situé en vis-à-vis des contacts de connexion du connecteur 3 (non visible sur cette figure) et le faisceau de fils de liaison 4.

On a également représenté la branche 55 du L, munie par exemple de deux ouvertures de liaison 52 et de deux ailettes 51.

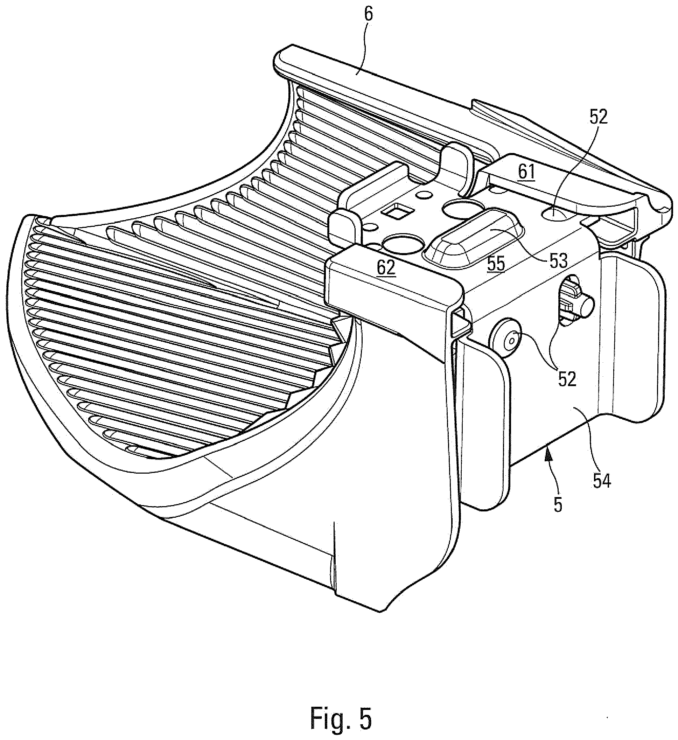

La figure 5 est une vue en perspective du dispositif selon l'invention une fois monté sur une partie support d'un dispositif lumineux, par exemple le réflecteur d'un projecteur pour véhicule automobile.

Sur cette figure, on a représenté le dissipateur 5 dans une vue analogue à celle de la figure 4, monté sur un réflecteur 6 en vue partielle.

Le réflecteur 6 comporte par exemple deux glissières 61 et 62 en partie supérieure, dans lesquelles vient s'insérer celle des branches (55) du dissipateur 5 qui porte les sources de lumières (non visibles sur la figure), de sorte que ces dernières illuminent l'intérieur du réflecteur. Certains bossages 52 permettent de fixer la branche 55 du dissipateur 5 dans les glissières 61, 62 du réflecteur 6.

Le dissipateur peut encore être rendu solidaire du réflecteur 6 par sa branche 54, dont les orifices 52 reçoivent par exemple des moyens de vissage (vis ou tiges filetées par exemple).

Avec un tel montage, le dissipateur 5 et les éléments qu'il porte sont fixés de façon résistante et fiable sur le réflecteur 6 sans que la présence du connecteur 3 ou celle du bossage 53 ne gêne ou n'empêche la fixation ni n'augmente de façon sensible l'encombrement de l'ensemble. En outre, le bossage 53 constitue une protection mécanique pour les contacts du connecteur 3.

Dans une variante de réalisation, selon l'orientation finale du projecteur dans lequel est inséré le dispositif selon l'invention, il est possible de réaliser des trous dans le bossage 53 pour évacuer une éventuelle accumulation d'eau si le bossage est orienté vers le bas. Néanmoins, ces trous doivent rester petits pour ne pas limiter l'évacuation thermique réalisée par le dissipateur 5.

Dans une autre variante de réalisation, le faisceau de fils 4 peut être remplacé par un circuit imprimé flexible, couramment appelé « flex », sur lequel les fils sont remplacés par des pistes conductrices imprimées.

## Revendications

1. Module lumineux comportant au moins un composant électronique (2) et un connecteur électrique (3), le composant et le connecteur étant interconnectés par un dispositif d'interconnexion électrique (1), le dispositif d'interconnexion étant fixé à un dissipateur de chaleur (5),
- le connecteur (3) comportant des contacts (32) de connexion électrique,
- le connecteur (3) est disposé sur une face (11) du dispositif d'interconnexion (1) de sorte que les contacts (32) traversent le dispositif d'interconnexion pour émerger sur une autre (12) de ses faces, où ils sont reliés électriquement au dispositif d'interconnexion,
- le dispositif d'interconnexion (1) étant fixé au dissipateur (5) par la face d'émergence (12) des contacts (32),
- la surface du dissipateur thermique (5) recevant le dispositif d'interconnexion présentant une cavité (53) au moins au niveau des contacts (32), de façon à éviter le contact électrique des contacts (32) avec le dissipateur, et
**caractérisé par le fait que** la cavité (53) du dissipateur (5) est constituée par un bossage.

2. Module selon la revendication 1, **caractérisé par le fait que** le composant électronique (2) est disposé sur le dissipateur (5) et qu'il est connecté électriquement au dispositif d'interconnexion (1).

3. Module selon la revendication 1, **caractérisé par le fait que** le composant électronique (2) est disposé sur le dispositif d'interconnexion (1) et relié électriquement à ce dernier.

4. Module selon l'une des revendications précédentes, **caractérisé par le fait que** le dispositif d'interconnexion (1) est en contact thermique avec le dissipateur (5).

5. Module selon l'une des revendications précédentes, **caractérisé par le fait que** la cavité (53) présente une profondeur permettant de laisser subsister un écartement entre les contacts (32) et le dissipateur (5) suffisant pour éviter un arc électrique entre contacts et dissipateur.

6. Module selon l'une des revendications précédentes, **caractérisé par le fait que** le composant électronique (2) comprend au moins une puce émettrice semi-conductrice..

7. Module selon l'une des revendications précédentes, **caractérisé par le fait que** le dissipateur (5) est sensiblement en forme de L.

8. Module selon la revendication 7, **caractérisé par le fait que** le dispositif d'interconnexion (1) est fixé au dissipateur (5) par l'intermédiaire de l'une des branches du L formé par le dissipateur.

9. Module selon l'une des revendications précédentes, **caractérisé par le fait que** la cavité (53) du dissipateur (5) comporte des trous pour l'évacuation d'une éventuelle accumulation d'eau.

10. Module selon l'une des revendications précédentes, **caractérisé par le fait que** la liaison électrique entre les contacts (32) et le dispositif d'interconnexion (1) est une soudure à la vague ou un contact de type poussoir.

11. Dispositif lumineux, notamment d'éclairage et/ou de signalisation pour véhicule automobile, **caractérisé par le fait qu'**il comporte un support (6) et un module selon l'une des revendications précédentes, ce dernier étant fixé au support dudit dispositif lumineux.

12. Dispositif lumineux selon la revendication 11, **caractérisé par le fait que** le module est fixé au support (6) par l'intermédiaire du dissipateur (5).

13. Dispositif lumineux selon les revendications 11 et 12, **caractérisé par le fait que**, le module étant selon la revendication 7, le dissipateur (5) est fixé au support (6) par l'intermédiaire d'une des branches du L formé par le dissipateur..

14. Dispositif lumineux selon l'une des revendications 11 à 13, **caractérisé par le fait que** le support (6) est un réflecteur dudit dispositif lumineux.

## Patentansprüche

1. Leuchtmodul mit mindestens einem elektronischen Bauelement (2) und einem elektrischen Steckverbinder (3), wobei das Bauelement und der Steckverbinder über eine elektrische Zusammenschaltungsvorrichtung (1) zusammengeschaltet sind, wobei die Zusammenschaltungsvorrichtung an einem Wärmeableiter (5) befestigt ist,
- wobei der Steckverbinder (3) Anschlusskontakte (32) aufweist,
- wobei der Steckverbinder (3) auf einer Seite (11) der Zusammenschaltungsvorrichtung (1) angeordnet ist, so dass die Kontakte (32) die Zusammenschaltungsvorrichtung durchqueren, um auf einer anderen (12) ihrer Seiten auszutreten, wo sie elektrisch mit der Zusammenschaltungsvorrichtung verbunden sind,
- wobei die Zusammenschaltungsvorrichtung (1) am Ableiter (5) über die Austrittsseite (12) der Kontakte (32) befestigt ist,
- wobei die Oberfläche des Wärmeableiters (5), welche die Zusammenschaltungsvorrichtung aufnimmt, mindestens eine Kavität (53) an den Kontakten (32) aufweist, so dass der elektrische Kontakt der Kontakte (32) mit dem Ableiter verhindert wird, und **dadurch gekennzeichnet, dass** die Kavität (53) des Ableiters (5) aus einer Erhebung besteht.

2. Modul nach Anspruch 1, **dadurch gekennzeichnet, dass** das elektronische Bauelement (2) auf dem Ableiter (5) angeordnet ist und dass es elektrisch an die Zusammenschaltungsvorrichtung (1) angeschlossen ist.

3. Modul nach Anspruch 1, **dadurch gekennzeichnet, dass** das elektronische Bauelement (2) auf der Zusammenschaltungsvorrichtung (1) angeordnet und elektrisch mit dieser verbunden ist.

4. Modul nach einem der vorhergehenden Ansprüche, **dadurch gekennzeichnet, dass** die Zusammenschaltungsvorrichtung (1) mit dem Ableiter (5) in thermischem Kontakt ist.

5. Modul nach einem der vorhergehenden Ansprüche, **dadurch gekennzeichnet, dass** die Kavität (53) eine Tiefe aufweist, die es ermöglicht, einen Abstand zwischen den Kontakten (32) und dem Ableiter (5) fortbestehen zu lassen, der ausreicht, um einen Lichtbogen zwischen Kontakten und Ableiter zu vermeiden.

6. Modul nach einem der vorhergehenden Ansprüche, **dadurch gekennzeichnet, dass** das elektronische Bauelement (2) mindestens einen emittierenden Halbleiterchip umfasst.

7. Modul nach einem der vorhergehenden Ansprüche, **dadurch gekennzeichnet, dass** der Ableiter (5) im Wesentlichen L-förmig ist.

8. Modul nach Anspruch 7, **dadurch gekennzeichnet, dass** die Zusammenschaltungsvorrichtung (1) an dem Ableiter (5) über einen der Schenkel des von dem Ableiter gebildeten L befestigt ist.

9. Modul nach einem der vorhergehenden Ansprüche, **dadurch gekennzeichnet, dass** die Kavität (53) des Ableiters (5) Löcher zum Abführen einer etwaigen Wasseransammlung umfasst.

10. Modul nach einem der vorhergehenden Ansprüche, **dadurch gekennzeichnet, dass** die elektrische Verbindung zwischen den Kontakten (32) und der Zusammenschaltungsvorrichtung (1) eine Schwalllötung oder ein Stößelkontakt ist.

11. Leuchtvorrichtung, insbesondere Beleuchtungs- und/oder Signalisierungsvorrichtung für ein Kraftfahrzeug, **dadurch gekennzeichnet, dass** sie einen Träger (6) und ein Modul nach einem der vorhergehenden Ansprüche umfasst, wobei Letzteres am Träger der Leuchtvorrichtung befestigt ist.

12. Leuchtvorrichtung nach Anspruch 11, **dadurch gekennzeichnet, dass** das Modul am Träger (6) über den Ableiter (5) befestigt ist.

13. Modul nach den Ansprüchen 11 und 12, **dadurch gekennzeichnet, dass**, wenn das Modul ein Modul nach Anspruch 7 ist, der Ableiter (5) am Träger (6) über einen der Schenkel des von dem Ableiter gebildeten L befestigt ist.

14. Leuchtvorrichtung nach einem der Ansprüche 11 bis 13, **dadurch gekennzeichnet, dass** der Träger (6) ein Reflektor der Leuchtvorrichtung ist.

## Claims

1. Luminous module comprising at least one electronic component (2) and an electrical connector (3), the component and the connector being interconnected by an electrical interconnection device (1), the interconnection device being fastened to a heat sink (5),
- the connector (3) comprising electrical connection contacts (32),
- the connector (3) being arranged on one side (11) of the interconnection device (1) such that the contacts (32) pass through the interconnection device so as to emerge onto another (12) of its sides, where they are connected electrically to the interconnection device,
- the interconnection device (1) being fastened to the heat sink (5) via the side (12) onto which the contacts (32) emerge,
- the surface of the heat sink (5) receiving the interconnection device having a cavity (53) at least level with the contacts (32), so as to avoid electrical contact between the contacts (32) and the heat sink, and
- **characterized in that** the cavity (53) of the heat sink (5) is formed by embossing.

2. Module according to Claim 1, **characterized in that** the electronic component (2) is arranged on the heat sink (5) and **in that** it is connected electrically to the interconnection device (1).

3. Module according to Claim 1, **characterized in that** the electronic component (2) is arranged on the interconnection device (1) and connected electrically thereto.

4. Module according to any of the preceding claims, **characterized in that** the interconnection device (1) makes thermal contact with the heat sink (5).

5. Module according to any of the preceding claims, **characterized in that** the cavity (53) has a depth making it possible to leave a space between the contacts (32) and the heat sink (5) large enough to prevent electrical arcing between the contacts and the heat sink.

6. Module according to any of the preceding claims, **characterized in that** the electronic component (2) comprises at least one semiconductor emitter chip.

7. Module according to any of the preceding claims, **characterized in that** the heat sink (5) is substantially L-shaped.

8. Module according to Claim 7, **characterized in that** the interconnection device (1) is fastened to the heat sink (5) via one of the arms of the L formed by the heat sink.

9. Module according to any of the preceding claims, **characterized in that** the cavity (53) of the heat sink (5) comprises holes for draining any accumulation of water.

10. Module according to any of the preceding claims, **characterized in that** the electrical connection between the contacts (32) and the interconnection device (1) is obtained by wave soldering or a pushed-in-type contact.

11. Luminous device, in particular a lighting and/or signaling device for a motor vehicle, **characterized in that** it comprises a carrier (6) and a module according to any of the preceding claims, the latter being fastened to the carrier of said luminous device.

12. Luminous device according to Claim 11, **characterized in that** the module is fastened to the carrier (6) via the heat sink (5).

13. Luminous device according to Claims 11 and 12, **characterized in that**, the module being according to Claim 7, the heat sink (5) is fastened to the carrier (6) via one of the arms of the L formed by the heat sink.

14. Luminous device according to any of Claims 11 to 13, **characterized in that** the carrier (6) is a reflector of said luminous device.
